# EUROPÄISCHE PATENTSCHRIFT

(11) **EP 3 379 668 B1**
(45) Veröffentlichungstag und Bekanntmachung des Hinweises auf die Patenterteilung: **12.05.2021**
(21) Anmeldenummer: 18160914.0
(22) Anmeldetag: 09.03.2018
(51) Int. Cl.: H02G 7/20, H02G 1/02

(54) **UMRÜSTVERFAHREN BZW. HERSTELLUNGSVERFAHREN FÜR FREILEITUNGSMASTEN UND FREILEITUNGSMASTEN**
FREE CONDUIT MASTS AND CONVERSION METHOD OR METHOD FOR PRODUCING FREE CONDUIT MASTS
PROCÉDÉ DE TRANSFORMATION OU PROCÉDÉ DE FABRICATION POUR PYLÔNES ET PYLÔNES

(30) Priorität: 24.03.2017 CH 3892017
(43) Veröffentlichungstag der Anmeldung: 26.09.2018
(73) Patentinhaber: AXPO Grid AG, 5401 Baden (CH)
(72) Erfinder: THEDE, Matthias Carsten, 8400 Winterthur (CH)
(74) Vertreter: Keller Schneider Patent- und Markenanwälte AG (Zürich)

(56) Entgegenhaltungen:
- EP-A1- 1 683 248
- WO-A1-95/11541
- WO-A2-01/57982
- CH-A5- 694 716
- CN-A- 105 826 892
- SE-B- 460 447
- US-A- 5 365 115
- US-A- 5 920 130
- TIAN FENG ET AL: "Resultant Electric Field Reduction With Shielding Wires Under Bipolar HVDC Transmission Lines", IEEE TRANSACTIONS ON MAGNETICS, IEEE SERVICE CENTER, NEW YORK, NY, US, Bd. 50, Nr. 2, 21. Februar 2014 (2014-02-21), Seiten 221-224, XP011540875, ISSN: 0018-9464, DOI: 10.1109/TMAG.2013.2281402 [gefunden am 2014-02-26]

## Beschreibung

### Technisches Gebiet

Die vorliegende Erfindung beschreibt ein Umrüstverfahren von Freileitungsmasten für elektrische Hoch- und Höchstspannung, zur verbesserten Feldsteuerung des elektrischen Feldes von mindestens einem Leiterseil befestigt an dem Freileitungsmasten, sowie einen Freileitungsmasten, umfassend einen auf einem Boden befestigbaren Mastsockel an den sich eine Mastkonstruktion anschliesst, an welcher eine Mehrzahl von Hoch- oder Höchstspannung führenden Leiterseilen über Isolatoren an Leiterseiltraversen anordbar sind, wobei im Verlauf der Mastkonstruktion mindestens ein Blitzschutzseil entlang der Mastlängsachse an der Mastspitze oberhalb der anderen Bauteile angeordnet ist.

### Stand der Technik

Das Thema der vorliegenden Erfindung ist die Schaffung optimierter Freileitungsmasten 1 und eines Umrüst- bzw. Herstellungsverfahrens für Freileitungsmasten, wobei Einfluss auf die Feldcharakteristik 0 des elektrischen Feldes mindestens eines Wechselstromsystems, welches vom Freileitungsmast 1 geführt wird, genommen wird.

Mit Freileitungsmast 1 wird hier eine Mastkonstruktion verstanden, welche mindestens ein stromführendes Leiterseil 120, beaufschlagt mit einer Hoch- oder Höchstspannung von mehr als 100kV trägt. Ein solcher Freileitungsmast 1 kann als Tragmast, Abspannmast, Abzweigmast oder Kabelendmast eingesetzt werden, wobei benachbarte Freileitungsmasten 1 Wechselstrom beispielsweise zwischen Schaltanlagen leiten bzw. verteilen. Die hier hauptsächlich interessierenden Freileitungsmasten 1 weisen eine metallische Mastkonstruktion 10, insbesondere aus Stahl, in Form eines Stahlfachwerkmastens auf. Ein Mastsockel 13 ist in der Regel aus Beton gestaltet. Ein solcher Freileitungsmast 1 weist üblicherweise an seinem vom Boden B abgewandten Ende eine Blitzschutztraverse 11 mit mindestens einem Erdseil 110 oder Blitzschutzseil 110 auf. Die Blitzschutztraverse 11 ist eine Stützkonstruktion für das Erdseil 110, welche auch als Ausleger bezeichnet wird. Die Blitzschutztraverse 11 ist auch v-förmig mit zwei Armen ausgestaltet bekannt, wobei an jedem Armende ein Erdseil 110 befestigt sein kann. Das mindestens eine Erdseil 110 ist mit der geerdeten Mastkonstruktion 10 elektrisch leitend verbunden. Das Erdseil 110 kann aber auch oberhalb einer obersten Leiterseiltraverse 12, an der Oberseite der Leiterseiltraverse 12 befestigt sein. Um als Blitzschutz zu fungieren, muss das Erdseil 110 oberhalb der Leiterseiltraversen 12 und möglichst über der Spitze des Freiluftmastens 1 angeordnet sein.

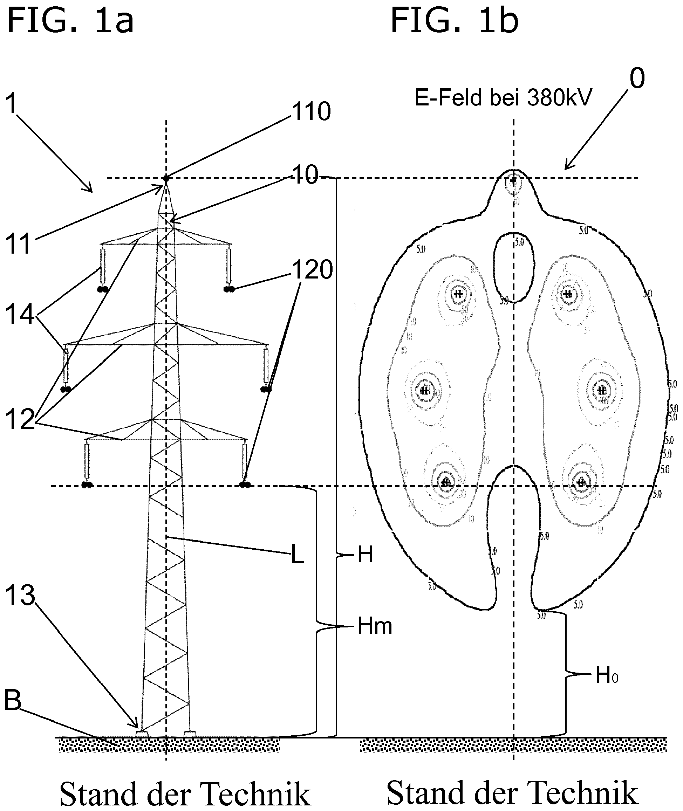

Die hier interessierenden Freileitungsmasten 1 weisen mindestens eine Leiterseiltraverse 12 auf, mittels welcher das elektrisch leitende Leiterseil 120 von der geerdeten Mastkonstruktion 10 beabstandet gehalten wird. Zur Herstellung der Blitzschutztraverse 11 und der Leiterseiltraverse 12 sind dem Fachmann verschiedene Formen von Stützkonstruktionen bekannt und es werden verschiedenste Materialien, beispielsweise Stahl, Aluminium oder auch glasfaserverstärkte Kunststoffe eingesetzt. An jeder Leiterseiltraverse 12 ist in der Regel jeweils ein Leiterseil eines Wechselstromkreises angeordnet. Beispielhaft ist hier in Figur 1a ein Freileitungsmast 1 gemäss Stand der Technik gezeigt, in dessen Verlauf entlang seiner Mastlängsachse L eine Blitzschutztraverse 11 mit einem Erdseil 110 an der Spitze der Mastkonstruktion 10 und drei unterschiedlich breite Leiterseiltraversen 12 mit jeweils zwei Leiterseilen 120 pro Leiterseiltraverse 12 angeordnet sind. Je nach Land und Netzbetreiber sehen die Freileitungsmasten 1 unterschiedlich aus und werden mit unterschiedlichen Spannungen beaufschlagt. Hier sind wie üblich noch Isolatoren 14 zwischen den Leiterseiltraversen 12 und den Leiterseilen 120 angeordnet, welche zusätzlich dafür sorgen, dass die Leiterseile 120 nicht mit der Mastkonstruktion 10 in Kontakt kommen können, sodass Kurz- bzw. Erdschlüsse vermieden werden.

Wenn die Leiterseile 120 im Betrieb mit elektrischen Spannungen von 380kV beaufschlagt werden, ergibt sich eine spezielle Feldcharakteristik 0 der elektrischen Feldstärke. In Figur 1b ist hier beispielhaft die Grösse des elektrischen Feldes in kV/m im Bereich um den Freileitungsmast 1 als Simulation dargestellt. Die Werte wurden mit einer entsprechenden Simulationssoftware ermittelt. Grob variiert der Mittelwert des elektrischen Feldes (E in kV/m) als Funktion des Ortes zwischen 5 kV/m entlang der äusseren Hüllkurve und 100 kV/m in direkter Umgebung der stromführenden Leiterseile 120. Im Betrieb resultiert in der Nähe der Freileitungsmasten 1 gemäss Stand der Technik eine Hüllkurve mit 5kV/m in einer Höhe H₀ vom Boden B entfernt.

Es sind vom Gesetzgeber Verordnungen erlassen worden, um Menschen vor schädlicher oder lästiger nichtionisierender Strahlung zu schützen. Diese Verordnung über den Schutz vor nichtionisierender Strahlung, in der Schweiz NISV genannt, regelt höchste zulässige magnetische und elektrische Felder im Bereich von Freileitungsmasten 1 im Betrieb. Damit keine Lebewesen geschädigt werden, muss in der Schweiz der Mindestabstand Hm der untersten Leiterseil-Ebene derart gewählt sein, dass am Boden B die Emissionsgrenzwerte gemäss NISV nicht überschritten werden. Ähnliche Regelungen gibt es auch in anderen Ländern.

Da die zulässigen Grenzwerte vielerorts angepasst bzw. nach unten korrigiert werden, werden die Grenzwerte der im Betrieb auftretenden elektromagnetischen Felder einiger Freileitungsmasten 1 überschritten. Die Feldcharakteristik des elektrischen Feldes in Bodennähe muss darum zwingend verändert werden.

Als Lösung dieses Problems hat man sich bislang meist dazu entschieden, die bestehenden Freileitungsmasten anzupassen, wobei in der Regel eine Erhöhung der Masthöhe H und damit ein vergrösserter Abstand der bodennächsten Leiterseile resultiert. Diese Anpassung ist aber mit extrem hohen Kosten verbunden, da der gesamte Freileitungsmast aufgestockt wird und dabei meist eine Anpassung vom Mastsockel bis zur Blitzschutztraverse erfolgen muss. Ebenso müssen für diese bauliche Veränderung entsprechende Genehmigungsverfahren durchlaufen werden, d.h. die Erhöhung der Masthöhe H kann nur mit relativ grossem zeitlichen Aufwand umgesetzt werden. Auf der 380-kV Spannungsebene führt dies dazu, dass im Rahmen von Sanierungen Freileitungsmasten 1 erhöht werden müssen und bei Neubauten extrahohe Freileitungsmasten 1 mit deutlich grösseren Masthöhen H erstellt werden, damit die Leiterseile 120 genügend Bodenabstand auch in der Mitte der Spannweite haben.

In der EP1683248 werden an einem unteren Ausleger befestigte Leiterseile beschrieben, welche über Kreuz von einem oberirdischen Bereich in einen unterirdischen Bereich und dort in unterirdisch verlegte Kompensationsleiter führen. Mit dieser Wahl der Leiterseile/Kompensationsleiter und dem kreuzweisen Verlauf werden die magnetischen Felder einer Freileitung reduziert, indem in den zusätzlichen Leiterseilen/Kompensationsleitern Gegenströme erzeugt werden. An mindestens 2 Freileitungsmasten muss ein sich überkreuzendes Leiterseil oberirdisch bis unterirdisch in jeweils auf beiden Seiten des Freileitungsmasten in einen Kompensationsleiter unterirdisch mündend verlegt werden. Dabei verläuft jeder Teil des Leiterseils jeweils von einer ersten Mastseite von einem oberirdischen Aufhängepunkt in den Erdboden auf einer zweiten Mastseite.

Eine solche Verlegung zusätzlicher Leiterseile/Kompensationsleiter, die beidseitig vom Freileitungsmasten überkreuz verlegt sind und mit geeigneten Spannungsquellen mit Gegenströmen beaufschlagt werden können und mit ausreichenden Befestigungsmitteln versehen werden müssen, ist aufwändig und teuer. Eine ähnliche Konstruktion ist in der SE460447 beschrieben, wobei Abschirmseile ebenfalls Strom führen müssen, damit ein abschirmendes Magnetfeld erzeugt werden kann. Dieser zusätzliche apparative Aufwand, sowie der komplizierte Betrieb mit gesteuerten induzierten Magnetfeldern ist nachteilig.

### Darstellung der Erfindung

Die vorliegende Erfindung hat sich zur Aufgabe gestellt ein Umrüstverfahren für Freileitungsmasten zu schaffen, welches einfach mit wenig Aufwand und geringen Kosten und Zeitaufwand durchführbar ist und welches die Charakteristik des elektrischen Feldes von am Freileitungsmast angeordneten Leiterseilen derart ändert, dass eine Masterhöhung unnötig wird, um die Grenzwerte der entsprechenden gesetzlichen Grundlagen einzuhalten. Es wurde nach einer Lösung gesucht, welche nur zu marginalen Wirkverlusten führt. Das magnetische Feld wird dabei nicht in relevanter Weise verändert. Ohne aufwändige Steuerungsvorrichtungen bzw. Spannungsquellen für die Erzeugung von abschirmenden Magnetfeldern sollte eine geänderte Charakteristik des elektrischen Felders geschaffen werden.

Eine weitere Aufgabe war die Schaffung von Freileitungsmasten, deren Feldcharakteristik derart optimiert ist, dass in Bodennähe die Grenzwerte der gesetzlichen Vorgaben eingehalten werden, wenn die Leiterseile mit Hoch- und Höchstspannungen beaufschlagt sind.

### Kurze Beschreibung der Zeichnungen

Der Erfindungsgegenstand wird nachstehend im Zusammenhang mit den anliegenden Zeichnungen beschrieben.
- Figur 1a: zeigt eine Seitenansicht eines Freileitungsmasten mit drei Leiterseiltraversen und einem Blitzschutzseil gemäss Stand der Technik, während
- Figur 1b: die Feldcharakteristik des Freileitungsmasten aus Figur 1a im Betrieb bei Spannungsbeaufschlagung mit Nennspannung 380kV, gemäss Stand der Technik zeigt.
- Figuren 2: zeigen Schnitte senkrecht zur Leitungsrichtung von umgerüsteten Freileitungsmasten mit mindestens einem zusätzlich angeordneten Feldsteuerungsseil zur Änderung der Feldcharakteristik.
- Figur 3a: zeigt eine Seitenansicht eines umgerüsteten erfindungsgemässen Freileitungsmasten mit zwei an einem Feldsteuerungsausleger angeordneten Feldsteuerungsseilen, während
- Figur 3b: die Feldcharakteristik des Freileitungsmasten gemäss Figur 3a zeigt.

### Beschreibung

Es wurden Experimente und Simulationen an Freileitungsmasten 1 durchgeführt, welche eine Mastkonstruktion 10 und von oben nach unten in Richtung einer Mastlängenachse L, eine Blitzschutztraverse 11, mehrere Leiterseiltraversen 12, mehrere Isolatoren 14, an welchen mehrere Leiterseile 120 isolierend befestigt sind und einem Mastsockel 13. In den hier gezeigten Abbildungen weisen die Freileitungsmasten 1, 1', 1", 1'", 1"" drei Leiterseiltraversen 12 auf drei Ebenen, in Richtung Mastlängsachse L beabstandet, auf. Der Blitzschutz umfasst hier ein Blitzschutzseil 110, welches zentrisch an der von einem Boden B abgewandten Mastspitze angeordnet ist.

Erstaunlicherweise haben zuerst Simulationen ergeben, dass das E-Feld und damit die Feldcharakteristik 0 eines spannungsbeaufschlagten Freileitungsmasten 1 in direkter Umgebung des Freileitungsmastens 1 manipulierbar ist, wenn mindestens ein Feldsteuerungsseil 2 zwischen benachbarten Freileitungsmasten 1 oder zwischen einem Freileitungsmasten 1 und beabstandeten Pfahl bzw. Bodenpunkt in der Nähe des Freileitungsmasten 1 verlaufend angeordnet ist.

Das mindestens eine Feldsteuerungsseil 2 ist in Form eines zusätzlichen Erdseils gewählt, welches geerdet ist und in einer Ebene unterhalb des untersten Leiterseils 120/der untersten Leiterseile 120 des/der Freileitungsmasten 1, dem Boden B zugewandt verlaufend angeordnet ist. Der Einsatz mindestens eines solchen Feldsteuerungsseils 2, dauerhaft am Freileitungsmasten 1 angeordnet, wird zur Feldsteuerung des elektrischen Feldes von Hochspannungsleitungen im Bereich der Freileitungsmasten 1 eingesetzt.

Obwohl das Feldsteuerungsseil 2 auf Erdpotential liegt, kann es nicht mit dem Erdseil 110 verwechselt werden, welches für Blitzschutzzwecke am Freileitungsmast 1 angeordnet ist. Das Erdseil 110 ist zwingend am höchsten Punkt und damit in Richtung Mastlängsachse L oberhalb der Leiterseiltraversen 12 angeordnet. Das hier eingeführte Feldsteuerungsseil 2 verläuft aber zwischen Freileitungsmasten 1 oder Freileitungsmast 1 und einem Punkt in der Umgebung in Richtung der Mastlängsachse L unterhalb der untersten Leiterseiltraverse 12, damit eine Abschirmung des E-Felds zum Boden B hin möglich ist.

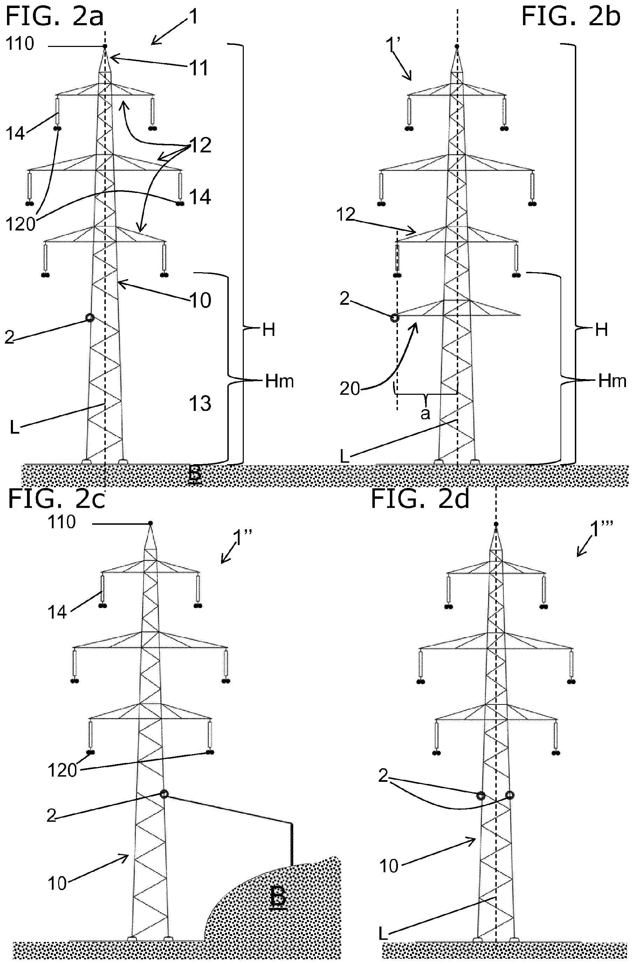

Wie in Figur 2a gezeigt, kann das mindestens eine Feldsteuerungsseil 2 direkt mit der bestehenden Mastkonstruktion 10 unterhalb der Ebene der untersten Leiterseile 120 verbunden werden. Als Verbindungsmöglichkeiten sind mehrere Ausführungsvarianten vorstellbar, beispielsweise Verbindungen mit Schellen, welche den Zug durch das Feldsteuerungsseil 2 aufnehmen können und eine sichere Befestigung garantieren.

Es können aber auch Feldsteuerungsausleger 20 zwischen der untersten Leiterseiltraverse 12 und dem Boden B an der Mastkonstruktion 10 befestigt werden. Ein entsprechender Freileitungsmast 1' ist in Figur 2b dargestellt. Auch hier kann das Feldsteuerungsseil 2 beispielsweise mit Schellen am Feldsteuerungsausleger 20 befestigt sein. Dabei kann der Feldsteuerungsausleger 20 einseitig, also nur zu einer Seite von der Mastkonstruktion 10 wegragend oder eben zweiseitig ausgeführt sein. An diesen Feldsteuerungsauslegern 20 kann das mindestens eine zusätzliche Feldsteuerungsseil 2 in einem Abstand a senkrecht zur Mastlängsachse L angeordnet werden. Damit ist der laterale Abstand des Feldsteuerungsseils 2 gegenüber der Mastlängsachse L vergrössert. Bevorzugt ist der Abstand a des Aufhängepunktes des mindestens einen Feldsteuerungsseils 2 grösser gleich der Breite der untersten Leiterseiltraverse 12 gewählt.

Figur 2c zeigt beispielhaft die Anordnung des mindestens einen Feldsteuerungsseils 2 zwischen der Mastkonstruktion 10 und dem benachbarten Boden B oder Gelände, wobei das Feldsteuerungsseil 2 nur am Mast geerdet ist. Neben dem Freileitungsmasten 1" ist noch zusätzlich ein Pfahl angedeutet, welcher senkrecht vom Boden B absteht und welcher mit dem Feldsteuerungsseil 2 verbunden ist. Durch diesen Pfahl wird das Feldsteuerungsseil 2 kreuzend zum Leiterseil 120 geführt, was unter bestimmten Geländeverläufen einen positiven Einfluss auf die Feldcharakteristik 0 hat.

Wenn zwei oder mehr Feldsteuerungsseile 2, bevorzugt symmetrisch zur Mastlängsachse L angeordnet verwendet werden, kann die Feldcharakteristik 0 weiter optimiert werden. In Figur 2d sind zwei Feldsteuerungsseile 2 direkt leitend mit der Mastkonstruktion 10 eines Freileitungsmasten 1''' verbunden.

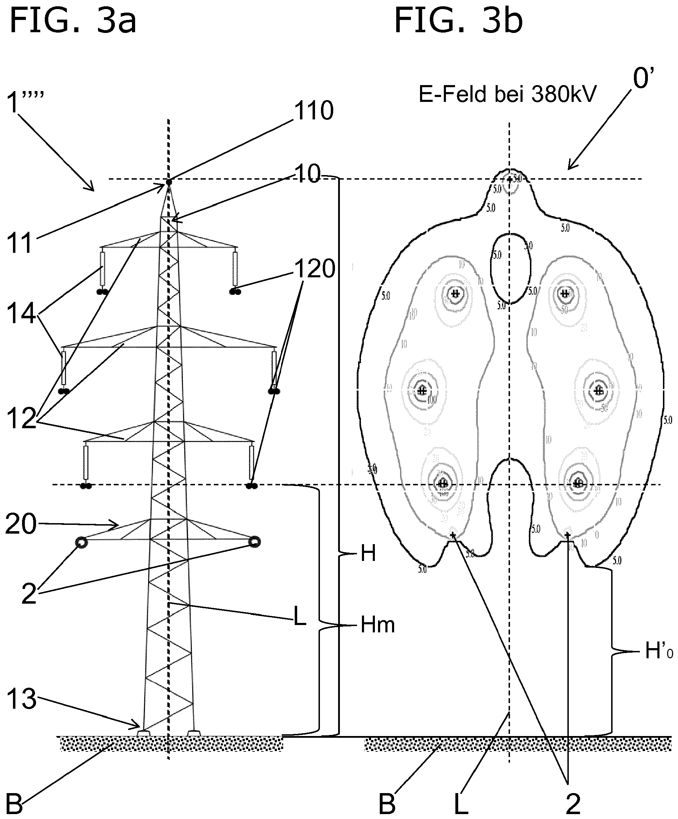

Ein Freileitungsmast 1"" mit einem Feldsteuerungsausleger 20, angeordnet in Richtung Mastlängsachse L unterhalb der untersten Leiterseiltraverse 12, ist in Figur 3a gezeigt. Hier sind zwei Feldsteuerungsseile 2 symmetrisch zur Mastkonstruktion 10 bzw. zur Mastlängsachse L mit dem jeweils gleichen Abstand zur Mastlängsachse L am Feldsteuerungsausleger 20 angeordnet. Der Feldsteuerungsausleger 20 bzw. die Feldsteuerungsseile 2 sind zwischen benachbarten Freileitungsmasten 1 innerhalb des Mindestabstands Hm des ersten Leiterseils 12 vom Boden B verlaufend angeordnet. Entlang der kompletten Distanz zwischen den benachbarten Freileitungsmasten 1 sind die Feldsteuerungsseile 2 unterhalb der untersten Leiterseile 120 aufgehängt.

Figur 3b zeigt die zu Figur 3a zugehörige Feldcharakteristik 0' im Betrieb bei Beaufschlagung der Leiterseile 120 mit 380kV. Im Bereich der Feldsteuerungsseile 2 sind Dellen oder Einschnürungen in der Hüllkurve der Feldcharakteristik 0' bei 5kV/m E-Feld-Feldstärke erkennbar. Die gesamte Hüllkurve ist im Vergleich mit dem Stand der Technik nach oben in Richtung z-Achse angehoben, sodass die gesamte Hüllkurve vom Boden weiter beabstandet ist. Im dem Boden B zugewandten Bereich weist die Hüllkurve die Einschnürungen auf, sodass der Abstand der Hüllkurve zum Boden B in diesem Bereich weiter erhöht ist. Die Feldcharakteristik 0' zeigt deutlich, dass die Emission, zumindest der elektrischen Feldstärke, in der Umgebung des Bodens B im Bereich des Freileitungsmasten 1 verringert ist. Die Höhe H0, bei welcher die E-Feldstärke 5kV/m beträgt, ist mit Feldsteuerungsseilen 2 grösser als im aus dem Stand der Technik bekannten Fall. Die Höhe H'₀, in welcher die E-Feldstärke 5 kV/m beträgt, kann durch Anordnung des mindestens einen Feldsteuerungsseils 2 im Vergleich zum Stand der Technik markant erhöht werden, wie erste Versuche gezeigt haben von etwa 10 m auf etwa 15 m.

Die Verlegung des mindestens einen Feldsteuerungsseils 2 zwischen benachbarten Freileitungsmasten 1 kann lokal auch mit der zusätzlichen Verlegung eines Feldsteuerungsseils 2 zwischen mindestens einem der Freileitungsmasten und dem benachbarten Bodenpunkt bzw. Pfahl gekoppelt werden. Sollte die Minimierung des E-Feldes durch das Feldsteuerungsseil 2 zwischen den Freileitungsmasten 1 nicht zum gewünschten Ergebnis führen, kann mindestens ein weiteres Feldsteuerungsseil 2 lokal von einem Freileitungsmasten 1 ausgehend zum Bodenpunkt bzw. Pfahl gezogen werden.

Um bestehende Freileitungsmasten 1 umzurüsten, wird mindestens ein Feldsteuerungsseil 2, welches auf Erdpotential liegt, direkt oder indirekt über einen Feldsteuerungsausleger 20 mit der Mastkonstruktion 10 verbunden. Dabei wird das mindestens eine Feldsteuerungsseil 2 unterhalb der untersten Leiterseiltraverse 12 dem Boden B zugewandt entweder zwischen benachbarten Freileitungsmasten 1 geführt oder von einem Freileitungsmast 1 zu einem Punkt in der Umgebung des Freileitungsmasten 1 geführt und optional auch dort geerdet. Der Feldsteuerungsausleger 20 muss natürlich vorgängig in der gewünschten Höhe an der Mastkonstruktion 10 befestigt worden sein, bevor das Feldsteuerungsseil 2 befestigbar ist.

Feldsteuerungsseile 2 können auch an Isolatoren 14 hängend an dem untersten Leiterseil 120 bzw. Leiterseilausleger 12 befestigt über die gesamte oder Teile der Spannweite geführt werden, wobei ein Ende mit dem Erdpotential verbunden sein muss.

Wie Simulationen gezeigt haben, ist der Abschirmeffekt grösser, wenn das mindestens eine Feldsteuerungsseil 2 im vom Boden B gesehen bei 2/3 des Mindestabstandes Hm des untersten Leiterseils 120 angeordnet ist, also im vom Boden B abgewandten oberen Drittel des Abstandes zwischen Boden B und unterem Leiterseilausleger 12.

Die umrüstbaren Freileitungsmasten 1 können Stahlfachwerkmasten oder auch Gittermasten, Stahlrohrmasten oder Betonmasten sein, welche mit mindestens einem Feldsteuerungsseil 2 ausgerüstet werden.

Je nach Formgebung des umliegenden Geländes des Freileitungsmasten 1 und den Anforderungen an die Emissionswerte, kann das mindestens eine Feldsteuerungsseil 2 zwischen benachbarten Freileitungsmasten 1 verlaufend angeordnet sein und zusätzlich an einigen Freileitungsmasten 1 zusätzlich ein Feldsteuerungsseil 2 vom Freileitungsmasten 1 zum Boden B im Bereich des Freileitungsmasten 1 verlaufend, angeordnet sein.

Durch die Abstrahländerung aufgrund des mindestens einen Feldsteuerungsseils 2, bleibt die Höhe des elektrischen Feldes in

Bodennähe unterhalb der Vorschriften, ohne, dass beispielsweise die Masthöhe H angepasst werden muss. Ist der Freileitungsmast 1 in für Menschen und Tiere zugänglichem Terrain aufgestellt, werden die Lebewesen entsprechend weniger mit elektrischen Feldern belastet, als in vergleichbarer Umgebung von Freileitungsmasten gemäss Stand der Technik.

Da heute oftmals auch Lichtwellenleiter an Freileitungsmasten 1 geführt werden, kann das Feldsteuerungsseil 2 optional ein lichtwellenleiterführendes Hybridseil sein, wobei im Kern des Hybridseils der Lichtwellenleiter geführt wird. Der Kern aus Lichtwellenleitern wird von auf Erdpotential liegenden Feldsteuerungsseiladern umgeben bzw. vollständig umhüllt. In der Regel verlaufen der Kern aus Lichtwellenleitern und die Feldsteuerungsseiladern konzentrisch in dem Hybridseil. Die Änderung der Feldcharakteristik bleibt trotz eingefügter Lichtwellenleiter bestehen.

Neben Feldsteuerungsmitteln in Form der bisher beschriebenen Feldsteuerungsseile 2 können auch Feldsteuerungsmittel in Form von Feldsteuerungsstangen, -ketten bzw. Feldsteuerungsrohren verwendet werden, welche vor allem zwischen Freileitungsmast 1 und dem Bodenpunkt in der Umgebung des Freileitungsmastens 1, vom Freileitungsmast 1 weggeführt verlegt eingesetzt werden können. Die Feldsteuerungsmittel sind elektrische Leiter, in der Regel aus Metall bzw. Metalladern, welche auf Erdpotential liegen.

Erfindungsgemäss wird hier kein Magnetfeld unterhalb der Leiterseile durch ein magnetisches Gegenfeld abgeschwächt, sondern es ist eine Möglichkeit gefunden worden das elektrische Feld oberhalb des Bodens oder darauf befindlicher Objekte durch auf Erdpotential liegende, oberirdisch unterhalb der Leiterseile verlaufende Feldsteuerungsmittel abzuschirmen. Entsprechend werden keine Strom- oder Spannungsquellen, weder gesteuert noch ungesteuert an den Feldsteuerungsmitteln angeschlossen verwendet, was den Aufbau stark vereinfacht. Die Abschwächung der elektromagnetischen Felder der Leiterseile erfolgt hier passiv durch mindestens ein Feldsteuerungsmittel auf Erdpotential. Auf eine aktive Abschirmung durch Magnetfelder von stromführenden zusätzlichen Seilen wird hier verzichtet. Um zusätzliche Verluste aufgrund der Feldsteuerungsmittel zu verhindern, sind diese im Idealfall an einer Stelle durch ein isolierendes Element zu unterbrechen, sodass keine induzierten Ströme durch das Feldsteuerungsmittel fliessen können.

### Bezugszeichenliste

0, 0' Feldcharakteristik (E-Feld)
1 Freileitungsmast
   10 Mastkonstruktion (Stahlfachwerkmast)
   11 Blitzschutztraverse/ -ausleger
      110 Erdseil / Blitzschutzseil
   12 Leiterseiltraverse/- ausleger
      120 Leiterseil
   13 Mastsockel (Beton)
   14 Isolator
   L Mastlängsachse
   H Masthöhe
   Hm Mindestabstand des ersten Leiterseils vom Boden
   H₀, H'₀ Höhe bei welcher die E-Feldstärke 5 kV/m beträgt B Boden
2 Feldsteuerungsmittel/Feldsteuerungsseil (-kette, -rohr, mindestens eins)
   20 Feldsteuerungsausleger

## Patentansprüche

1. Umrüstverfahren von Freileitungsmasten (1) für elektrische Hoch- und Höchstspannung, zur verbesserten Feldsteuerung des elektrischen Feldes von mindestens einem Leiterseil (120) befestigt an dem Freileitungsmasten (1) mit einer Mastkonstruktion (10),
**gekennzeichnet durch die Schritte:**
Befestigung eines auf Erdpotential liegenden Feldsteuerungsmittels (2) in Form von Feldsteuerungsseilen (2), Feldsteuerungsstangen, Feldsteuerungsketten oder -röhren,
einseitig direkt oder indirekt dauerhaft und leitend an der Mastkonstruktion (10)
in Richtung einer Mastlängsachse (L) unterhalb des mindestens einen Leiterseils (120), dem Boden (B) zugewandt und
Verlegen des Feldsteuerungsmittels (2) vollständig ausschliesslich oberirdisch durch die Luft verlaufend
zwischen einem Freileitungsmasten (1) und einem Punkt in der Umgebung des Freileitungsmastens (1), sodass das Feldsteuerungsmittel (2) dauerhaft am Freileitungsmasten (1) entlang seiner gesamten Länge oberirdisch durch die Luft bis zu einem benachbarten Freileitungsmasten (1) bzw. dem Punkt in der Umgebung des Freileitungsmastens (1) verlaufend angeordnet ist
und zur Feldsteuerung des elektrischen Feldes unterhalb der Leiterseile (120) im Bereich des Freileitungsmasten (1) zwischen Leiterseil (120) und Bodenoberfläche einsetzbar ist, wobei das Feldsteuerungsmittel (2) nicht mit elektrischem Strom beaufschlagt wird.

2. Umrüstverfahren nach Anspruch 1, wobei das Feldsteuerungsmittel (2) oberirdisch durch die Luft in einem Abstand zum Boden (B) kleiner als der Mindestabstand (Hm) des untersten Leiterseils (120) vom Boden (B) verlaufend angeordnet wird, bevorzugt im vom Boden (B) beabstandeten oberen Drittel des Mindestabstandes (Hm).

3. Umrüstverfahren nach Anspruch 1, wobei das Feldsteuerungsmittel (2) mittels Isolatoren (14) am untersten Leiterseilausleger (12) oder am untersten Leiterseil (120) befestigt ist.

4. Umrüstverfahren nach einem der vorhergehenden Ansprüche, wobei das Feldsteuerungsmittel (2) an einem Feldsteuerungsausleger (20) an der Mastkonstruktion (10) indirekt und senkrecht zur Längsachse (L) beabstandet befestigt wird.

5. Umrüstverfahren nach einem der vorhergehenden Ansprüche, wobei das Feldsteuerungsmittel (2) mittels Schellen leitend direkt oder indirekt an der bestehenden Mastkonstruktion (10) befestigt werden.

6. Umrüstverfahren nach Anspruch 1, wobei lokal an mindestens einem Freileitungsmasten (1) ein weiteres Feldsteuerungsmittel (2) von der Mastkonstruktion (10) zu einem Pfahl im Gelände geführt ist.

7. Umrüstverfahren nach Anspruch 6, wobei der Pfahl derart vom Boden (B) wegragt, dass das Feldsteuerungsmittel (2) über eine maximale Distanz in einem minimalen Abstand zum Leiterseil (120) geführt wird und/oder kreuzend zum Leiterseil (120) geführt wird.

8. Freileitungsmasten (1), umfassend einen auf einem Boden (B) befestigbaren Mastsockel (13) an den sich eine Mastkonstruktion (10) anschliesst, an welcher eine Mehrzahl von Hoch- oder Höchstspannung führenden Leiterseilen (120) über Isolatoren (14) an Leiterseiltraversen (12) anordbar sind,
wobei im Verlauf der Mastkonstruktion mindestens ein Blitzschutzseil (110) entlang der Mastlängsachse (L) an der Mastspitze oberhalb der anderen Bauteile angeordnet ist,
**dadurch gekennzeichnet, dass**
ein Feldsteuerungsmittel (2) einseitig in Richtung der Mastlängsachse (L) unterhalb der untersten Leiterseiltraverse (12) dem Boden (B) zugewandt ausschliesslich auf ihrer gesamten Länge oberirdisch durch die Luft verlaufend auf Erdpotential liegend in Form eines Feldsteuerungsseils (2), einer Feldsteuerungskette, -stange oder eines Feldsteuerungsrohres von der Mastkonstruktion (10) weg zu einem Bodenpunkt in der Umgebung des Freileitungsmasten (1) geführt und dort dauerhaft befestigt ist, sodass die Feldcharakteristik (0) der Leiterseile (120) zwischen Mastkonstruktion (10) und Oberfläche des Bodens (B) veränderbar ist, wobei das Feldsteuerungsmittel (2) nicht mit elektrischem Strom beaufschlagt wird.

9. Freileitungsmasten (1) nach Anspruch 8, wobei ein Freileitungsmast (1) über ein Feldsteuerungsmittel (2) mit benachbarten Freileitungsmasten (1) und zusätzlich über ein Feldsteuerungsmittel (2) lokal mit einem Bodenpunkt in der Umgebung des Freileitungsmasten (1) verbunden ist.

10. Freileitungsmasten (1) nach Anspruch 8 oder 9, wobei das Feldsteuerungsmittel (2) im vom Boden (B) abgewandten oberen Drittel des Mindestabstandes (Hm) des untersten Leiterseils (120) am Freileitungsmasten (1) angeordnet ist.

11. Freileitungsmasten (1) nach Anspruch 8 oder 9, wobei das Feldsteuerungsmittel (2) mittels Isolator (14) am untersten Leiterseilausleger (12) oder am untersten Leiterseil (120) befestigt angeordnet ist.

12. Freileitungsmasten (1) nach einem der Ansprüche 8 bis 10, wobei das Feldsteuerungsmittel (2) an einem Feldsteuerungsausleger (20), welcher an der Mastkonstruktion (10) befestigt ist, beabstandet von der Mastlängsachse (L) angeordnet ist.

13. Freileitungsmasten (1) nach einem der Ansprüche 8 bis 12, wobei bei Anordnung mehrerer Feldsteuerungsmittel (2), die Feldsteuerungsmittel (2) symmetrisch zur Mastlängsachse (L) bzw. zur Mastkonstruktion (10) beabstandet verlegt sind.

14. Freileitungsmasten (1) nach einem der Ansprüche 8 bis 13, wobei das Feldsteuerungsmittel (2) von der Mastkonstruktion (10) zu einem Pfahl, welcher den Punkt in der Umgebung des Freileitungsmasten (1) bildet, geführt und dort befestigt ist.

## Claims

1. A conversion method for transmission towers (1) for electric high-voltage and extra high-voltage in order to improve the field control of the electric field of at least one conductor cable (120) that is fastened on the transmission tower (1) with a tower construction (10),
**characterized by the following steps:**
fastening a field control means (2), which is connected to ground potential and realized in the form of field control cables (2), field control rods, field control chains or field control pipes, directly or indirectly on one side of the tower construction (10) in a permanent and conductive manner
underneath the at least one conductor cable (120) in the direction of a longitudinal tower axis (L) toward the ground (B), and
installing the field control means (2) in such a way that it completely extends solely above ground through the air
between a transmission tower (1) and a point in the surroundings of the transmission tower (1) such that the field control means (2) is permanently arranged on the transmission tower (1) so as to extend above ground through the air over its entire length up to an adjacent transmission tower (1) or the point in the surroundings of the transmission tower (1)
and can be used for the field control of the electric field underneath the conductor cables (120) in the region of the transmission tower (1) between the conductor cable (120) and the ground surface, wherein the field control means (2) is not subjected to an electric current.

2. The conversion method according to claim 1, wherein the field control means (2) is arranged in such a way that it extends above ground through the air at a distance from the ground (B), which is smaller than the minimum distance (Hm) of the lowermost conductor cable (120) from the ground (B), preferably in the upper third of the minimum distance (Hm) from the ground (B).

3. The conversion method according to claim 1, wherein the field control means (2) is fastened on the lowermost conductor cable arm (12) or on the lowermost conductor cable (120) by means of insulators (14).

4. The conversion method according to one of the preceding claims, wherein the field control means (2) is indirectly fastened on a field control arm (20) on the tower construction (10) and spaced apart perpendicular to the longitudinal axis (L).

5. The conversion method according to one of the preceding claims, wherein the field control means (2) is directly or indirectly fastened on the existing tower construction (10) in a conductive manner by means of clamps.

6. The conversion method according to claim 1, wherein an additional field control means (2) is on at least one transmission tower (1) locally routed from the tower construction (10) to a pole in the ground.

7. The conversion method according to claim 6, wherein the pole protrudes from the ground (B) in such a way that the field control means (2) is over a maximal distance routed at a minimal clearance from the conductor cable (120) and/or routed so as to intersect the conductor cable (120).

8. Transmission towers (1) comprising a tower foundation (13), which can be fastened on the ground (B) and to which a tower construction (10) is connected, wherein a plurality of high-voltage or extra high-voltage conductor cables (120) can be arranged on said tower construction on conductor cable cross arms (12) by means of insulators (14), and
wherein at least one lightning protection cable (110) is in the course of the tower construction arranged above the other components on the top of the tower along the longitudinal tower axis (L),
**characterized in that**
a field control means (2), which is connected to ground potential and realized in the form of a field control cable (2), a field control chain, a field control rod or a field control pipe, is on one side routed away from the tower construction (10) to a point on the ground in the surroundings of the transmission tower (1), as well as permanently fastened thereon, underneath the lowermost conductor cable cross arm (12) in the direction of the longitudinal tower axis (L) toward the ground (B) such that it solely extends above ground through the air over its entire length and the field characteristic (0) of the conductor cables (120) between the tower construction (10) and the surface of the ground (B) can thereby be varied, wherein the field control means (2) is not subjected to an electric current.

9. The transmission towers (1) according to claim 8, wherein a transmission tower (1) is connected to adjacent transmission towers (1) by a field control means (2) and in addition locally connected to a point on the ground in the surroundings of the transmission tower (1) by a field control means (2).

10. The transmission towers (1) according to claim 8 or 9, wherein the field control means (2) is arranged in the upper third of the minimum distance (Hm) of the lowermost conductor cable (120) on the transmission tower (1) from the ground (B).

11. The transmission towers (1) according to claim 8 or 9, wherein the field control means (2) is fastened on the lowermost conductor cable arm (12) or on the lowermost conductor cable (120) by means of insulators (14).

12. The transmission towers (1) according to one of claims 8 to 10, wherein the field control means (2) is arranged on a field control arm (20), which is fastened on the tower construction (10), such that it is spaced apart from the longitudinal tower axis (L).

13. The transmission towers (1) according to one of claims 8 to 12, wherein an arrangement of multiple field control means (2) comprises field control means (2), which are respectively installed symmetrical to the longitudinal tower axis (L) and spaced apart from the tower construction (10).

14. The transmission towers (1) according to one of claims 8 to 13, wherein the field control means (2) is routed from the tower construction (10) to a pole, which forms the point in the surroundings of the transmission tower (1), and fastened thereon.

## Revendications

1. Procédé de transformation de pylône de ligne aérienne (1) pour haute et ultrahaute tension électrique, pour améliorer la commande de champ du champ électrique d'au moins un câble conducteur (120) fixé au pylône de ligne aérienne (1) par une structure de pylône (10), **caractérisé par les étapes suivantes :**
fixation d'un moyen de commande de champ (2) se trouvant au potentiel de terre sous la forme de câbles de commande de champ (2), de barres de commande de champ, de chaînes ou de tuyaux de commande de champ, unilatéralement directement ou indirectement de manière permanente et avec conduction à la structure de pylône (10)
en direction d'un axe longitudinal de pylône (L) en-dessous de l'au moins un câble conducteur (120) tourné vers le sol (B) et
pose du moyen de commande de champ (2) orienté entièrement exclusivement à travers l'air au-dessus de la terre
entre un pylône de ligne aérienne (1) et un point dans l'environnement du pylône de ligne aérienne (1), de sorte que le moyen de commande de champ (2) est disposé de manière permanente au niveau du pylône de ligne aérienne (1) en étant orienté sur toute sa longueur au-dessus du sol à travers l'air jusqu'à un pylône de ligne aérienne voisin (1) ou jusqu'au point de l'environnement du pylône de ligne aérienne (1) et utilisable pour la commande de champ du champ électrique en-dessous des câbles conducteurs (120) au niveau du pylône de ligne aérienne (1) entre le câble conducteur (120) et la surface du sol, le moyen de commande de champ (2) n'étant pas sollicité avec du courant électrique.

2. Procédé de transformation selon la revendication 1, dans lequel le moyen de commande de champ (2) est disposé au-dessus du sol à travers l'air, à une distance du sol (B) inférieure à la distance minimale (Hm) du câble conducteur le plus bas (120) par rapport au sol (B), de préférence dans le tiers supérieur espacé du sol (B) de la distance minimale (Hm).

3. Procédé de transformation selon la revendication 1, dans lequel le moyen de commande de champ (2) est fixé au moyen d'isolateurs (14) au bras de câble conducteur le plus bas (12) ou au câble conducteur le plus bas (120).

4. Procédé de transformation selon une des revendications précédentes, dans lequel le moyen de commande de champ (2) est fixé à un bras de commande de champ (20) au niveau de la structure de pylône (10) en étant espacé indirectement et perpendiculairement par rapport à l'axe longitudinal (L).

5. Procédé de transformation selon une des revendications précédentes, dans lequel le moyen de commande de champ (2) peut être fixé au moyen de coques avec conduction directement ou indirectement à la structure de pylône existante (10).

6. Procédé de transformation selon la revendication 1, dans lequel, localement, au niveau d'au moins un pylône de ligne aérienne (1), un autre moyen de commande de champ (2) est guidé depuis la structure de pylône (10) jusqu'à un poteau dans le terrain.

7. Procédé de transformation selon la revendication 6, dans lequel le poteau dépasse du sol (B) de manière à ce que le moyen de commande de champ (2) soit guidé sur une distance maximale à distance minimale du câble conducteur (120) et/ou se croise avec le câble conducteur (120).

8. Pylône de ligne aérienne (1), comprenant un socle de pylône (13) pouvant être fixé sur un sol (B) et auquel se raccorde une structure de pylône (10) au niveau de laquelle une pluralité de câbles conducteurs de guidage de haute et ultrahaute tension (120) peuvent être disposés par l'intermédiaire d'isolateurs (14) à des traverses de câbles conducteurs (12),
étant disposé, dans l'extension de la structure de pylône, au moins un câble de protection contre la foudre (110) le long de l'axe longitudinal de pylône (L) à la pointe du pylône au-dessus des autres composantes,
**caractérisé en ce**
**qu'**un moyen de commande de champ (2) est guidé unilatéralement en direction de l'axe longitudinal du pylône (L) en-dessous de la traverse de câble conducteur la plus basse (12) en étant tourné vers le sol (B) exclusivement en étant orienté sur toute sa longueur au-dessus du sol à travers l'air et en se trouvant au potentiel de terre sous la forme d'un câble de commande de champ (2), d'une chaîne, d'une barre de commande de champ ou d'un tuyau de commande de champ depuis la structure de pylône (10) vers un point au sol dans l'environnement du pylône de ligne aérienne (1) et qu'il y est fixé de manière permanente, de sorte que la caractéristique de champ (0) des câbles conducteurs (120) entre la structure de pylône (10) et la surface du sol (B) est modifiable, le moyen de commande de champ (2) n'étant pas sollicité avec du courant électrique.

9. Pylône de ligne aérienne (1) selon la revendication 8, dans lequel un pylône ligne aérienne (1) est raccordé par un moyen de commande de champ (2) à des pylônes de ligne aérienne voisins (1) et en plus par un moyen de commande de champ (2) localement à un point au sol dans l'environnement du pylône de ligne aérienne (1).

10. Pylône de ligne aérienne (1) selon la revendication 8 ou 9, dans lequel le moyen de commande de champ (2) est disposé dans le tiers détourné du sol (B) de la distance minimale (Hm) par rapport au câble conducteur le plus bas (120) au niveau du pylône de ligne aérienne (1).

11. Pylône de ligne aérienne (1) selon la revendication 8 ou 9, dans lequel le moyen de commande de champ (2) est disposé au moyen d'un isolateur (14) en étant fixé au bras de câble conducteur le plus bas (12) ou au câble conducteur le plus bas (120).

12. Pylône de ligne aérienne (1) selon une des revendications 8 à 10, dans lequel le moyen de commande de champ (2) est disposé au niveau d'un bras de commande de champ (20), qui est fixé à la structure de pylône (10), à distance de l'axe longitudinal du pylône (L).

13. Pylône de ligne aérienne (1) selon une des revendications 8 à 12, dans lequel, en cas de disposition de plusieurs moyens de commande de champ (2), les moyens de commande de champ (2) sont posés de manière à être 32 symétriquement par rapport à l'axe longitudinal du pylône (L) ou à la structure du pylône (10).

14. Pylône de ligne aérienne (1) selon une des revendications 8 à 13, dans lequel le moyen de commande de champ (2) est guidé vers un poteau qui constitue le point dans l'environnement du pylône (10) de ligne aérienne (1) et y est fixé.
